# EUROPÄISCHE PATENTSCHRIFT

(11) **EP 0 863 347 B1**
(45) Veröffentlichungstag und Bekanntmachung des Hinweises auf die Patenterteilung: **15.05.2002**
(21) Anmeldenummer: 97103689.2
(22) Anmeldetag: 06.03.1997
(51) Int. Cl.: F16K 31/60

(54) **Thermostatventil-Kopf mit farbigem Deckel für Heizungsanlagen**
Thermostatic valve handle with a coloured lid for a heating installation
Poignée d'un robinet thermostatique avec un couvercle coloré pour un installation de chauffage

(43) Veröffentlichungstag der Anmeldung: 09.09.1998
(73) Patentinhaber: Theodor Heimeier Metallwerk GmbH & Co KG, 59592 Erwitte (DE)
(72) Erfinder: Beele, Heinz Eckard, 59609 Anröchtee (DE); Fuhrmann, Jürgen, 59510 Lippetal (DE); Marx, Annette, 59581 Warstein (DE)

(56) Entgegenhaltungen:
- DE-A- 2 428 511
- DE-A- 3 040 627
- FR-A- 1 571 785

## Beschreibung

Die Erfindung betrifft einen Thermostatventil-Kopf für Heizungsanlagen, nach dem Oberbegriff des Anspruchs 1.

Ein derartiger Thermostatventil-Kopf ist aus der DE 30 40 627 A1 vorbekannt. Dieser vorbekannte Thermostatventil-Kopf weist einen Deckel auf, der die Stirnseite der Kappe überdeckt, wobei der Deckel mit Rastvorsprüngen in Öffnungen der vom Ventil abgewandten Stirnseite der Kappe eingerastet ist. Auf diesem Deckel können beispielsweise Firmenangaben der die Heizungsinstallation durchführenden Fachfirma aufgedruckt sein.

In dieser nicht vorveröffentlichten Patentanmeldung sind jedoch keine Angaben darüber gemacht, welche Farben der Deckel und die Kappe aufweisen sollen, und insbesondere wie die Farben von Deckel und Kappe im Verhältnis gewählt werden sollen.

Die Erfindung hat die Aufgabe, einen Thermostatventil-Kopf für Heizungsanlagen zu schaffen, der mit einfachen Maßnahmen eine Berücksichtigung von thermischen Strahlungsanteilen und eine bessere Wärmeleitung der Umgebungstemperatur hin zu dem im Inneren der Kappe angeordneten Temperatur-Weggeber ermöglicht.

Diese Aufgabe wird erfindungsgemäß durch die Merkmale des Anspruchs 1 gelöst.

Häufig weisen die heute verwendeten drehbaren Kappen sehr helle Farben, bis hin zu der Farbe weiß auf. Derartige helle Farbtöne sind jedoch nicht geeignet nennenswerte Strahlungsanteile des die Kappe umgebenden Raumes aufzunehmen. Diese Strahlungswärme ist jedoch der Wärmeanteil, der ohne große zeitliche Verzögerung den zu temperierenden Raum erfaßt und auf den ein Thermostatventil-Kopf auch reagieren können sollte. Dies wird mit der erfindungsgemäß beanspruchten Maßnahme erreicht. Denn dadurch, daß die Farbe des Deckels sich von der Farbe der Kappe unterscheidet, und für den Deckel dunklere Farben verwendet werden, die auf Grund der zugrunde liegenden physikalischen Gesetzmäßigkeiten wesentlich besser als helle Farben geeignet sind, Strahlungswärmeanteile zu erfassen, reagiert der Thermostatventil-Kopf schneller auf Temperaturänderungen.

Der besondere Vorteil besteht darin, den Thermostatventil-Kopf in die Lage zu versetzen neben der Raumlufttemperatur auch Strahlungsanteile zu erfassen und so eine Regelung der vom Menschen empfundenen Temperatur, der sogenannten operativen Temperatur, zu ermöglichen. Durch unterschiedliche Farbwahl können Strahlungsanteile unterschiedlich stark bewertet bzw. spezifische Kleidungen der betreffenden Menschen ausgeglichen werden.

Dabei kann die Farbe des Deckels bis hin zu sehr dunklen Farben wie beispielsweise schwarz gewählt werden. Es genügt jedoch auch, wenn statt der sehr hellen oder gar weißen Farbe einer Kappe eine intensiv bunte Farbe, wie beispielsweise signalrot oder dunkelblau gewählt wird.

Auf Grund dieser Farbwahl und auf Grund der Tatsache, daß der Deckel die Stirnseite der Kappe vorteilhaft nahezu vollständig überdeckt, können gegenüber dem vorbekannten wesentlich höhere Strahlungsanteile der Umgebung erfasst werden, was eine schnellere Reaktion des erfindungsgemäßen Thermostatventil-Kopfes auf derartige kurzfristige Änderungen der Raumtemperatur emöglicht, die auch dem physiologischen Wärmeempfinden der Benutzer entsprechen.

Dabei ist die erfindungsgemäße Lösung besonders einfach und kostengünstig realisierbar, weil allein die Wahl der Farben von Deckel und Kappe für den erfindungsgemäßen Erfolg zu wählen sind.

Vorteilhafte Ausgestaltungen und Weiterbildungen der Erfindung gehen aus den Merkmalen der Unteransprüche hervor.

So ist es besonders vorteilhaft, wenn aus dekorativen Gründen beispielsweise die Farbe des Deckels der Farbe des Heizkörpers der Heizungsanlage entsprechend gewählt wird, an dem der erfindungsgemäße Thermostatventil-Kopf angeordnet ist. Wenn die Erfassung von Strahlungsanteilen weitgehend vermieden werden soll und die dekorative Wirkung im Vordergrund steht, kann der Deckel auch eine Metallbeschichtung aufweisen.

Insbesondere dann, wenn zusätzlich zu dem farblich abweichend gewählten Deckel auf dem Deckel noch ein Hersteller-Aufdruck oder ein Aufdruck mit Hinweis auf den Installateur aufgebracht ist, kann besonders vorteilhaft die Öffnung im Zentrum der Stirnseite der Kappe angeordnet sein, wobei einer der Rastvorsprünge zu einer Zunge verlängert ist. Die Zunge gibt dann dem die Kappe auf den Deckel befestigenden Bediener der Heizungsanlage den Hinweis mit welcher Orientierung der Deckel auf der Kappe zu befestigen ist.

Um dem Deckel eine Vorspannung für einen festen Sitz auf der Kappe zu geben, kann der Deckel eine auf die Stirnseite der Kappe gerichtete Wölbung aufweisen. Ebenso kann der Deckel einen umlaufenden Rand aufweisen, um eine umlaufende, scharfkantige Auflage des Deckelrandes auf der Kappe zu gewährleisten, sodaß ein dichter Abschluß zwischen Deckel und Kappe in deren Übergangsbereich gewährleistet ist. Zudem kann der Dekkel eine vom Zentrum zum Rand hin abnehmende Materialstärke aufweisen, um eine Anpassung der Deckelkontur an die Öberfläche der vergleichsweise steifen Kappenstirnseite zu ermöglichen.

Schließlich ist es besonders vorteilhaft, wenn der Deckel insbesondere gemeinsam mit den Rastvorsprüngen und einer gegebenenfalls vorhandenen Zunge einstückig aus Kunststoff gespritzt ist. Diese Fertigungsmethode ermöglicht auf einfache und kostengünstige Weise die besondere, beanspruchte, konstruktive Ausgestaltung des Deckels.

Ein Ausführungsbeispiel des erfindungsgemäßen Thermostatventil-Kopfes ist in den Zeichnungen dargestellt und wird im folgenden Anhang der Zeichnung näher erläutert.

Es zeigen
- Fig. 1: eine teilweise explosionsartig ausgebildete Darstellung eines Thermostatventil-Kopfes für Heizungsanlagen und
- Fig. 2: einen Schnitt durch einen Deckel des Thermostatventil-Kopfes gemäß Fig. 1

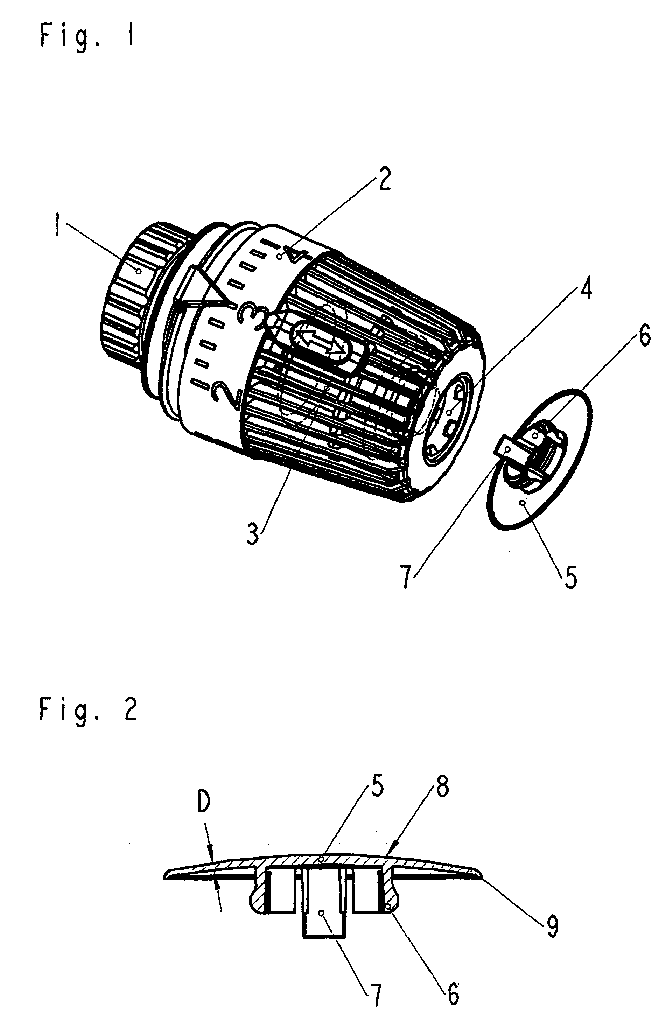

In der Fig. 1 weist der Thermostatventil-Kopf für Heizungsanlagen ein ventilseitiges Anschlußteil (1) auf, das mit dem eigentlichen Heizkörperventil an einem in den Figuren nicht dargestellten Heizkörper, beispielsweise durch eine Anordnung mit einer Überwurfmutter verbunden ist. Weiterhin weist der Thermostatventil-Kopf eine von dem nicht dargestellten Ventil abgewandten gegenüber dem Anschlußteil (1) drehbare Kappe (2) auf. Diese Kappe (2) ist aus Kunststoff gespritzt. Diese Kappe (2) umgibt einen in der Fig. 1 gestrichelt dargestellten Temperatur-Weggeber (3), der sein Volumen abhängig von der umgebenden Raumtemperatur ändert.

In der vom Ventil abgewandten Stirnseite der Kappe (2) ist eine zentrale Öffnung (4) angeordnet, in die Rastvorsprünge (6) eines Deckel (5) eingreifen. Zusätzlich ist einer der Rastvorsprünge (6) zu einer Zunge (7) verlängert.

Die Rastvorsprünge (6), die Zunge (7) und der Deckel (5), sind gemeinsam einstückig aus Kunststoff-Material gespritzt. Der Deckel (5) überdeckt dabei im wesentlichen vollständig die Stirnseite der Kappe (2).

Was aus der Fig. 1 nicht unmittelbar hervorgeht, ist, daß erfindungsgemäß die Farbe des Deckels (5) sich von der Farbe der Kappe (2) dahingehend unterscheidet, daß die Farbe des Deckels (5) dunkler ist als die Farbe der Kappe (2). Dies ermöglicht einerseits die dekorative Veränderung des erfindungsgemäßen Thermostatventil-Xopfes, z.B. im Sinne einer Anpassung der Farbe des Deckels (5) an die Farbe des in den Figuren nicht dargestellten Heizkörpers der Heizungsanlage. Andererseits sind jedoch damit die Eingangs beschriebenen Vorteile erzielbar, daß nämlich bei Wahl einer dunklen Farbe für den Deckel (5) in wesentlich größerem Maße als bisher Strahlungsanteile der den Thermostatventil-Kopf umgebenden Wärme erfasst, und über den Deckel (5) an den Temperatur-Weggeber (3) im wesentlichen ohne zeitliche Verzögerung übermittelt werden können.

In der Fig. 2 weist der Deckel (5) eine in Richtung auf die Stirnseite der Kappe (2) gerichtete Wölbung (8) auf. Weiterhin weist der Deckel (5) einen umlaufenden Rand (9) auf. Schließlich ist die Materialstärke (D) des Deckels (5) vom Zentrum zum Rand hin abnehmend ausgebildet, um eine Anpassung des Deckels (5) an die Kontur der Stirnseite der Kappe (2) eine Vorspannung des Deckels (5) auf der Kappe (2) und eine umlaufende, scharfkantige Auflage des Randes (9) des Deckels (5) auf der Stirnseite der Kappe (2) zu ermöglichen.

Schließlich sind in der Fig. 2 nochmal die Rastvorsprünge (6) teilweise und die Zunge (7) erkennbar, die einstückig mit dem übrigen Deckel (5) ausgebildet sind.

## Patentansprüche

1. Thermostatventil-Kopf für Heizungsanlagen mit einem ventilseitigen Anschlußteil (1), mit einer vom Ventil abgewandten , gegenüber dem Anschlußteil (1) drehbaren Kappe (2), die einen Temperatur-Weggeber (3) umgibt, mit mindestens einer Öffnung (4) auf der vom Ventil abgewandten Stirnseite der Kappe (2) und mit einem Deckel (5), der mit Rastvorsprüngen (6) in die Öffnung (4) eingerastet ist und die Stirnseite der Kappe (2) überdeckt, **dadurch gekennzeichnet, daß** die Farbe des Deckels (5) sich von der Farbe der Kappe (2) unterscheidet und daß die Farbe des Deckels (5) dunkler ist als die Farbe der Kappe (2), sodaß eine bessere Wärmeleitung der Umgebungstemperatur hin zu dem im Inneren der Kappe angeordneten Temperatur-Weggeber ermöglicht wird.

2. Thermostatventil-Kopf nach Anspruch 1, **dadurch gekennzeichnet, daß** die Farbe des Deckels (5) schwarz ist.

3. Thermostatventil-Kopf nach Anspruch 1, **dadurch gekennzeichnet, daß** die Farbe des Deckels (5) der Farbe des Heizkörpers der Heizungsanlage entspricht.

4. Thermostatventil-Kopf nach Anspruch 1, **dadurch gekennzeichnet, daß** der Deckel (5) eine Metallbeschichtung aufweist.

5. Thermostatventil-Kopf nach Anspruch 1, **dadurch gekennzeichnet, daß** die Öffnung (4) im Zentrum der Stirnseite angeordnet ist und, daß einer der Rastvorsprünge (6) zu einer Zunge (7) verlängert ist.

6. Thermostatventil-Kopf nach Anspruch 1, **dadurch gekennzeichnet, daß** der Deckel (5) eine auf die Stirnseite der Kappe gerichtete Wölbung (8) aufweist.

7. Thermostatventil-Kopf nach Anspruch 1, **dadurch gekennzeichnet, daß** der Deckel (5) einen umlaufenden Rand (9) aufweist.

8. Thermostatventil nach Anspruch 1, **dadurch gekennzeichnet, daß** der Deckel (5) eine vom Zentrum zum Rand hin abnehmende Materialstärke (D) aufweist.

9. Thermostatventil-Kopf nach Anspruch 1, **dadurch gekennzeichnet, daß** der Deckel (5) aus Kunststoff gespritzt ist.

## Claims

1. A thermostatic valve head for heating installations with a connecting element (1) on the end facing the valve, with a cap (2), which faces away from the valve, is rotatable relative to the connecting element (1) and encloses a temperature pickup (3), with at least one opening (4) on the end face of the cap (2) remote from the valve and with a cover (5), which is locked by means of locking projections (6) in the opening (4) and covers the end face of the cap (2), **characterised in that** the colour of the cover (5) differs from the colour of the cap (2) and the colour of the cover (5) is darker than the colour of the cap (2), allowing for improved heat transmission of the surrounding temperature to the temperature pickup arranged inside the cap.

2. A thermostatic valve head according to claim 1, **characterised in that** the colour of the cover (5) is black.

3. A thermostatic valve head according to claim 1, **characterised in that** the colour of the cover (5) corresponds to the colour of the heating element of the heating installation.

4. A thermostatic valve head according to claim 1, **characterised in that** the cover (5) comprises a metallic coating.

5. A thermostatic valve head according to claim 1, **characterised in that** the opening (4) is arranged in the centre of the end face and one of the locking projections (6) is extended to form a tongue (7).

6. A thermostatic valve head according to claim 1, **characterised in that** the cover (5) comprises a curvature (8) in the direction of the end face of the cap.

7. A thermostatic valve head according to claim 1, **characterised in that** the cover (5) comprises a circumferential edge (9).

8. A thermostatic valve head according to claim 1, **characterised in that** the cover (5) comprises a material thickness (D) decreasing from the centre towards the edge.

9. A thermostatic valve head according to claim 1, **characterised in that** the cover (5) is injection moulded from plastics material.

## Revendications

1. Tête de soupape thermostatique pour installations de chauffage, comprenant une pièce de raccordement (1), un capuchon (2) détourné de la soupape et susceptible de tourner par rapport à la pièce de raccordement (1), lequel entoure un capteur de température à déplacement (3), au moins une ouverture (4) sur la face frontale du capuchon (2) détournée de la soupape, et un couvercle (5) qui est enclenché avec des saillies d'enclenchement (6) dans l'ouverture (4) et qui recouvre la face frontale du capuchon (2), **caractérisée en ce que** la couleur du couvercle (5) se distingue de la couleur du capuchon (2) et **en ce que** la couleur du couvercle (5) est plus foncée que la couleur du capuchon (2), de sorte qu'une meilleure conductibilité de chaleur de la température ambiante vers le capteur de température à déplacement agencé à l'intérieur du capuchon est rendue possible.

2. Tête de soupape thermostatique selon la revendication 1, **caractérisée en ce que** la couleur du couvercle (5) est noire.

3. Tête de soupape thermostatique selon la revendication 1, **caractérisée en ce que** la couleur du couvercle (5) correspond à la couleur du radiateur de l'installation de chauffage.

4. Tête de soupape thermostatique selon la revendication 1, **caractérisée en ce que** le couvercle (5) présente un revêtement métallique.

5. Tête de soupape thermostatique selon la revendication 1, **caractérisée en ce que** l'ouverture (4) est agencée au centre de la face frontale et **en ce qu'**une des saillies d'enclenchement (6) est prolongée pour former une languette (7).

6. Tête de soupape thermostatique selon la revendication 1, **caractérisée en ce que** le couvercle (5) présente un bombement (8) orienté vers la face frontale du capuchon.

7. Tête de soupape thermostatique selon la revendication 1, **caractérisée en ce que** le couvercle (5) présente un bord (9) périphérique.

8. Tête de soupape thermostatique selon la revendication 1, **caractérisée en ce que** le couvercle (5) présente une épaisseur de matériau (D) diminuant depuis le centre vers le bord.

9. Tête de soupape thermostatique selon la revendication 1, **caractérisée en ce que** le couvercle (5) est réalisé en matière plastique par injection.
